# EUROPEAN PATENT APPLICATION

(11) **EP 4 306 201 A1**
(43) Date of publication of application: **17.01.2024**
(21) Application number: 22784574.0
(22) Date of filing: 29.03.2022
(51) Int. Cl.: B01D 46/52

(54) **FILTER PACK AND AIR FILTER EQUIPPED THEREWITH**

(30) Priority: 09.04.2021 JP 2021066458
(71) Applicant: Nippon Muki Co., Ltd., Taitou-ku Tokyo 110-0015 (JP)
(72) Inventor: SEKI, Kazuya, Yuki-shi, Ibaraki 307-0046 (JP); JINGUUJI, Takumu, Yuki-shi, Ibaraki 307-0046 (JP); HAYASHI, Shiro, Yuki-shi, Ibaraki 307-0046 (JP)
(74) Representative: Körfer, Thomas
(86) International application number: PCT/JP2022/015356
(87) International publication number: WO 2022/215590

(57) **Abstract**

[Problem] To provide a filter pack capable of suitably maintaining pleat spaces while suppressing an increase in pressure loss, and an air filter including the filter pack.

[Solution] The filter pack incudes a filter medium having folds alternately repeated on upstream and downstream sides of airflow by a pleating process, at least one pair of upstream ventilation surfaces facing each other via the fold on the downstream side therebetween and into which the airflow flows, and at least one pair of downstream ventilation surfaces facing each other via the fold on the upstream side therebetween and from which the airflow flows out, and a plurality of space maintaining members formed on each of the upstream ventilation surfaces and each of the downstream ventilation surfaces to maintain spaces of each pair of upstream ventilation surfaces and each pair of downstream ventilation surfaces. The plurality of space maintaining members formed on the upstream ventilation surfaces are intermittently formed in a direction orthogonal to the fold. At least one space maintaining member formed on one side of the pair of upstream ventilation surfaces is in contact at two or more places with at least one space maintaining member formed on the other side of the pair of upstream ventilation surfaces.

## Description

### Technical Field

The present invention relates to a filter pack including a pleated filter medium and an air filter including the filter pack.

### Background Art

Conventionally, a filter pack in which space maintaining members are formed in a pleated filter medium so that pleat spaces are kept uniform has been known. For example, PTL 1 discloses a filter pack in which spaces are maintained by contact between space maintaining members that face each other.

### Citation List

### Patent Literature

PTL 1: JP2020-062610A

### Summary of Invention

### Technical Problem

The space maintaining member has an effect of maintaining the pleat spaces of the filter pack, but increases the pressure loss due to covering the ventilation surface of the filter medium. In addition, in order to bring the space maintaining members into contact with each other, if the positional and dimensional accuracy is not obtained when forming the space maintaining members and when performing the pleating process, the space maintaining members do not contact each other, and as a result, the pleat spaces may not be kept uniform.

The invention has been made in consideration of such circumstances, and an object of the invention is to provide a filter pack capable of suitably maintaining pleat spaces while suppressing an increase in pressure loss, and an air filter including the filter pack.

### Solution to Problem

In order to solve the above-mentioned problem, the filter pack of the present disclosure includes a filter medium collecting fine particles in a gas and the filter medium comprising folds alternately repeated on an upstream side and on a downstream side of airflow by a pleating process, at least one pair of upstream ventilation surfaces which face each other via the fold on the downstream side therebetween and into which the airflow flows, and at least one pair of downstream ventilation surfaces which face each other via the fold on the upstream side therebetween and from which the airflow flows out, and a plurality of space maintaining members formed on each of the upstream ventilation surfaces and each of the downstream ventilation surfaces to maintain spaces of each pair of upstream ventilation surfaces and each pair of downstream ventilation surfaces, and the plurality of space maintaining members formed on the upstream ventilation surfaces are intermittently formed in a direction orthogonal to the fold, and at least one of the space maintaining members formed on one side of the pair of upstream ventilation surfaces is in contact at two or more places with at least one of the space maintaining members formed on the other side of the pair of upstream ventilation surfaces.

### Advantageous Effects of Invention

In the filter pack and the air filter including the filter pack according to the invention, it is possible to suitably maintain the pleat spaces while suppressing an increase in pressure loss.

### Brief Description of Drawings

FIG. 1 is an external perspective view showing an air filter that is an embodiment of an air filter of the invention.
FIG. 2 is a view showing a portion of a folded filter pack as viewed in a direction in which folds of pleats extend.
FIG. 3 is a partially enlarged view of FIG. 2.
FIG. 4 is a partially enlarged view of a filter pack as a first modification.
FIG. 5 is a partially enlarged view of a filter pack as a second modification.
FIG. 6 shows a filter pack as a third modification and is a view showing a portion of the filter pack that is folded as viewed in a direction in which folds of pleats extend.
FIG. 7 shows a filter pack as a fourth modification and is a view showing a portion of the filter pack that is folded as viewed in a direction in which folds of pleats extend.

### Description of Embodiments

Embodiments of a filter pack and an air filter according to the invention will be described with reference to the accompanying drawings.

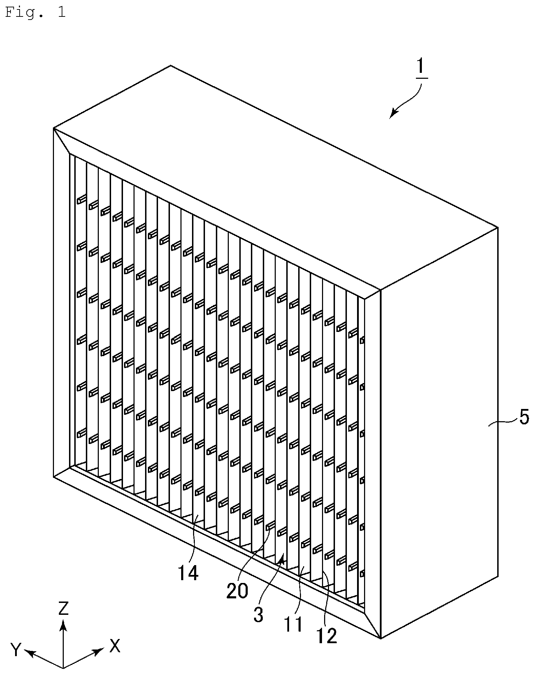

FIG. 1 is an external perspective view showing an air filter 1 that is an embodiment of the air filter of the invention.

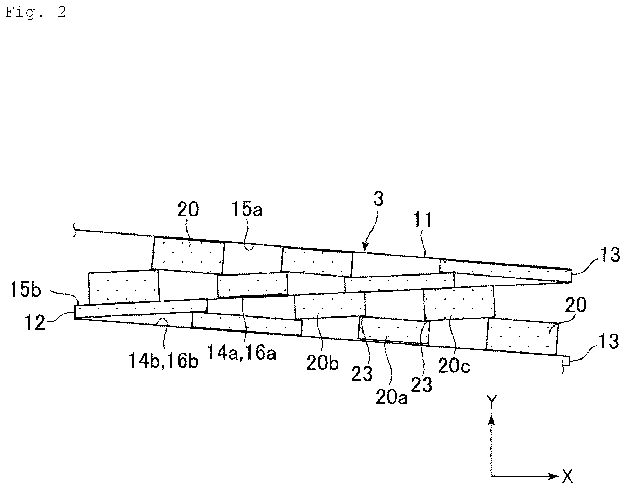

FIG. 2 is a view showing a portion of a filter pack 3 that is folded as viewed in a direction in which folds 12 and 13 of pleats extend (upper view).

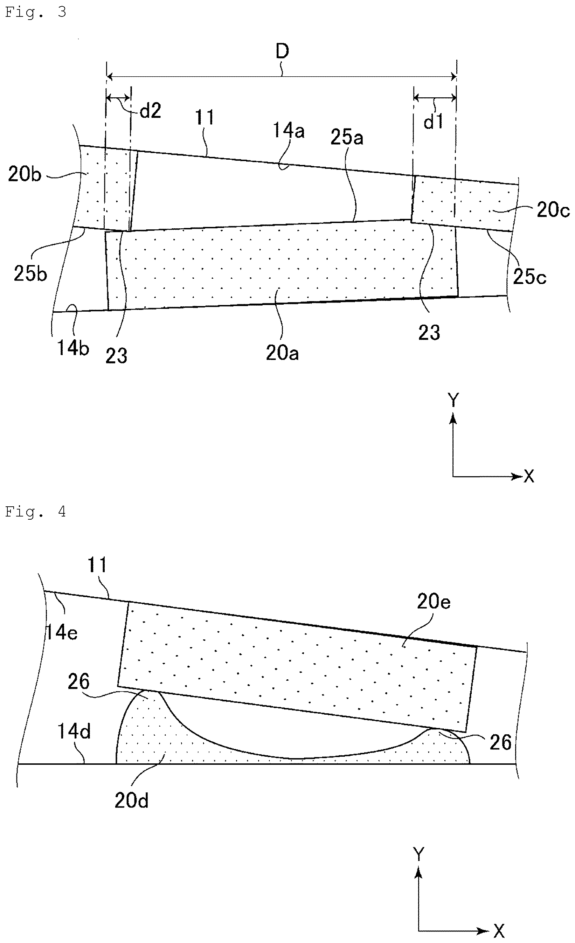

FIG. 3 is a partially enlarged view of FIG. 2.

The air filter 1 has the filter pack 3 and a frame 5. The frame 5 surrounds the filter pack 3 so that the folds 12 and 13 of a filter medium 11 of the filter pack 3 are arranged on upstream and downstream sides in a direction of airflow (X direction) passing through the filter medium 11. In the present embodiment, for the sake of convenience, a fold located on the upstream side of the airflow (-X direction) is referred to as the fold 12, and a fold located on the downstream side of the airflow (+X direction) is referred to as the fold 13. The filter pack 3 has the filter medium 11 and a plurality of space maintaining members 20.

The filter medium 11 is a member that collects fine particles in a gas. The filter medium 11 is used to remove, for example, dust having a particle diameter of 2.5 um or less at a concentration of 0.3 mg/m³ or less. The filter medium 11 has, for example, a collection efficiency of 80% or more according to a counting method, a pressure loss of 79 to 493 Pa, and a dust holding capacity (dust holding amount) of 200 to 800 g/m². In the counting method, measurement is performed by allowing air containing particles of any of atmospheric dust, polyalphaolefin (PAO), and silica having a particle diameter of 0.3 um to pass therethrough. The dust holding capacity is the amount of dust collected by the filter until a given final pressure loss is reached. In addition, the filter medium 11 may also be, for example, a filter medium for a HEPA filter, a filter medium for a ULPA filter, or a filter medium for a gas removal filter.

The filter medium 11 is, for example, a fibrous body made of a glass fiber, an organic fiber, or a mixed fiber of these fibers, and is, for example, a nonwoven fabric or felt. The filter medium 11 made of a glass fiber is produced, for example, by papermaking with a wet method or a dry method. The filter medium 11 made of an organic fiber is produced, for example, by a spun-bond method, a melt-blow method, a thermal bond method, a chemical bond method, or the like. In addition, the filter medium 11 may be, for example, a laminate of a plurality of nonwoven fabrics having different collection efficiencies.

The filter medium 11 is subjected to a pleating process into an approximate V shape so that mountain folds and valley folds are alternately repeated. The pleating process is performed using a reciprocating-type or rotarytype folding machine or the like. The filter medium 11 has the folds 12 and 13 parallel to each other on the upstream and downstream sides of the airflow due to the pleating process. Further, the filter medium 11 has a plurality of pairs of ventilation surfaces 14 (ventilation surfaces 14a and 14b) that are continuous with the fold 12 or 13 therebetween and face each other approximately in a Y direction.

Specifically, the ventilation surface 14 has a plurality of (at least one) pairs of upstream ventilation surfaces 15a and 15b and pairs of downstream ventilation surfaces 16a and 16b. The pair of upstream ventilation surfaces 15a and 15b are ventilation surfaces 14 which face each other via the fold 13 on the downstream side therebetween and into which airflow flows. The pair of downstream ventilation surfaces 16a and 16b are ventilation surfaces 14 which face each other via the fold 12 on the upstream side therebetween and from which airflow flows out. Hereinafter, the upstream ventilation surfaces 15a and 15b and the downstream ventilation surfaces 16a and 16b are simply referred to as the ventilation surfaces 14 when they are not distinguished from each other.

The space maintaining members 20 are a plurality of members that maintain a space (pleat space) set between the pair of ventilation surfaces 14 of the filter medium 11. The space maintaining members 20 are intermittently formed on the ventilation surfaces 14 in a direction (approximate X direction) orthogonal to a direction along the folds 12 and 13. In FIG. 2, for example, three space maintaining members 20 are intermittently formed on the ventilation surface 14a.

At least one space maintaining member 20 formed on one side of the pair of ventilation surfaces 14 is in contact at two or more places with at least one space maintaining member 20 formed on the other side of the pair of ventilation surfaces 14. Specifically, a space maintaining member 20a formed on the ventilation surface 14b is in contact with a plurality of space maintaining members 20b and 20c adjacent thereto formed on the ventilation surface 14a at two contact places 23, 23.

The space maintaining member 20 formed on one side of the pair of ventilation surfaces 14 has a facing surface 25 facing to the space maintaining member 20 formed on the other side of the pair of ventilation surfaces 14. The facing surface 25 is, for example, a flat tip surface of the space maintaining member 20. As shown in FIG. 3, in a facing surface 25a of the space maintaining member 20a formed on the ventilation surface 14b, a sum of lengths d1 and d2 thereof along an approximate X direction in contact with facing surfaces 25b and 25c of the space maintaining members 20b and 20c formed on the ventilation surface 14a is preferably 1% or more and 10% or less of a length D along an approximate X direction of the facing surface 25a. When it is less than 1%, the contact place 23 is small, and the effect of maintaining the space may be reduced. When it is more than 10%, the dimension of the space maintaining member 20 becomes large, and as a result, the area covering the ventilation surface 14 becomes large, resulting in an increase in pressure loss when the filter is used.

Further, the space maintaining members 20 have different heights (lengths in an approximate Y direction) depending on the pleat space. Specifically, in FIG. 2, the pleat space between the pair of ventilation surfaces 14a and 14b increases from the fold 12 toward the fold 13, and therefore, the height of the space maintaining member 20 on a fold 12 side is small, and the height of the space maintaining member 20 on a fold 13 side is large.

The space maintaining member 20 is made of, for example, a thermoplastic resin called a hot-melt adhesive. Examples of such a thermoplastic resin include polyamidebased, urethane-based, and olefin-based thermoplastic resins. The space maintaining member 20 is formed, for example, by directly applying a hot-melt adhesive to the filter medium 11 approximately in the X direction of the filter medium 11 using a gun filled with a softened hot-melt adhesive. Further, the space maintaining member 20 may be formed, for example, by adhering a solidified hot-melt adhesive to the filter medium 11 other than direct application. Alternatively, the space maintaining member 20 may be made of other material such as a ceramic.

In such an air filter 1 and a filter pack 3, the space maintaining member 20 formed on one side of the pair of ventilation surfaces 14 is in contact at two places with the space maintaining member 20 formed on the other side of the pair of ventilation surfaces 14. Therefore, in the filter pack 3, the pleat space is easily maintained as compared with the case where it is in contact at one place. That is, when the space maintaining member 20 is in contact only at one place, for example, the space maintaining members 20 arranged on each side of the pair of ventilation surfaces 14 may be out of position due to production errors, and there may be a case where the space maintaining members 20 are not in contact with each other. In this case, the pleat space is not maintained, and the filter efficiency may decrease.

On the other hand, in the air filter 1 and the filter pack 3 of the present embodiment, the space maintaining members 20 are in contact at two places, and therefore, the space maintaining members 20 facing each other can reliably contact each other and are supported at two places. In addition, friction or the like acts at the contact places 23, so that there is also an advantage that the space maintaining members 20 are less likely to be out of position. Therefore, in such a filter pack 3 and an air filter 1, the pleat spaces can be suitably maintained while suppressing an increase in pressure loss.

Although several embodiments are described in the present disclosure, these embodiments are presented as examples and are not intended to limit the scope of the invention. These novel embodiments can be implemented in various other forms, and various omissions, replacements, and changes can be made without departing from the gist of the invention. These embodiments and modifications thereof are included in the scope and gist of the invention, and are also included in the scope of the invention described in the claims and equivalents thereof.

For example, in the example of the filter pack 3, an example in which one space maintaining member 20 formed on one side of the pair of ventilation surfaces 14 is in contact at one place with each of the plurality of space maintaining members 20 adjacent thereto formed on the other side of the pair of ventilation surfaces 14 is described. However, one space maintaining member 20 formed on one side of the pair of ventilation surfaces 14 may be in contact at a plurality of places with one space maintaining member 20 formed on the other side of the pair of ventilation surfaces 14. For example, as in a first modification shown in FIG. 4, one space maintaining member 20d formed on the other side of a pair of ventilation surfaces 14d has protruding shapes 26 protruding in a height direction at two places. A space maintaining member 20e formed on one side of a pair of ventilation surfaces 14e is in contact at two places by being in contact with the protruding shapes 26 at two places. Note that the number of contact places 23 may be two or more.

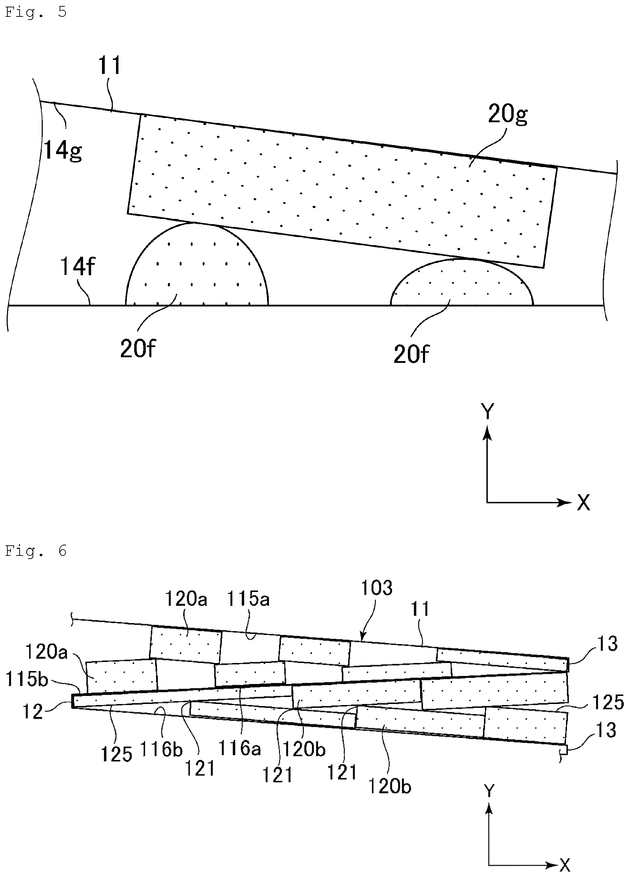

Further, as in a second modification shown in FIG. 5, among the space maintaining members 20 formed on a pair of ventilation surfaces 14f and 14g, a space maintaining member 20f formed on one side of the ventilation surface 14f may be provided in a dot shape (approximately hemispherical shape) with a short length approximately in the X direction. In this case, a space maintaining member 20g formed on the other side of the ventilation surface 14g is in contact at two or more places with two or more adjacent space maintaining members 20f facing thereto. As in the case of the filter pack in FIG. 4 or 5, when the space maintaining member 20e or 20g formed on one side of the ventilation surface 14e or 14g of the pair of ventilation surfaces 14 is supported at two places by at least one space maintaining member 20d or 20f formed on the other side of the ventilation surface 14d or 14f, even if the other space maintaining member 20d or 20f is supported at one place, the filter pack can be included in the scope of the filter pack of the invention.

Further, in the filter pack 3, an example in which the space maintaining members 20 are intermittently formed approximately in the X direction on any of the upstream ventilation surfaces 15a and 15b and the downstream ventilation surfaces 16a and 16b is described. However, the space maintaining members 20 may be continuously formed approximately in the X direction on the downstream ventilation surfaces 16a and 16b.

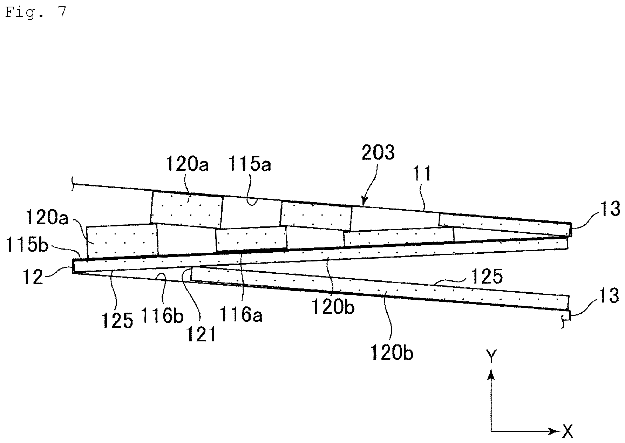

Here, FIG. 6 shows a filter pack 103 as a third modification and is a view showing a portion of the filter pack 103 that is folded as viewed in a direction in which folds of pleats extend. In FIGS. 6 and 7, configurations and parts corresponding to those of the filter pack 3 are denoted by the same reference numerals, and overlapping description will be omitted.

The difference between the filter pack 103 and the filter pack 3 is that space maintaining members 120b formed on downstream ventilation surfaces 116a and 116b are continuously formed, not intermittently, approximately in the X direction. That is, the space maintaining members 120b adjacent to each other approximately in the X direction are formed in close contact with each other without forming a gap.

For example, when the filter pack 103 is continuously ventilated, there is a possibility that the internal structure of the filter pack 103 will change even if no change occurs in the external appearance of the filter pack 103. For example, a pair of upstream ventilation surfaces 115a and 115b of the filter pack 103 may swell toward the outflow side due to the airflow that flows in, which may increase the pleat space between the pair of upstream ventilation surfaces 115a and 115b.

Therefore, in the filter pack 103, space maintaining members 120a and 120b are formed so as to increase the strength of the filter medium 11 while taking into account the advantage of suppressing an increase in pressure loss as in the filter pack 3. That is, the space maintaining members 120a formed on the upstream ventilation surfaces 115a and 115b are intermittently formed approximately in the X direction, and the space maintaining members 120b formed on the downstream ventilation surfaces 116a and 116b are continuously formed approximately in the X direction. The space maintaining member 120b is in contact with a facing surface 125 of the space maintaining member 120b facing thereto at a rise 121 with respect to the downstream ventilation surfaces 116a and 116b from the upstream side to the downstream side.

As a result, the space maintaining member 120b can prevent the pair of upstream ventilation surfaces 115a and 115b from swelling toward the outflow side while ensuring the ventilation area, so that the pleat space at the start of use can be maintained. Further, since the strength of the filter pack 103 is increased, the stability of the shape is improved even during continuous ventilation, and as a result, an increase in pressure loss can be suppressed.

In the filter pack 103 in FIG. 6, an example in which a plurality of space maintaining members 120b are continuously formed approximately in the X direction on the downstream ventilation surfaces 116a and 116b is described. However, as shown in a filter pack 203 as a fourth modification in FIG. 7, one space maintaining member 120b may be formed in an elongated shape over the downstream ventilation surfaces 116a and 116b approximately in the X direction.

### Reference Signs List

1: air filter
3, 103, 203: filter pack
5: frame
11: filter medium
12, 13: fold
14: ventilation surface
20, 120: space maintaining member
23: contact place
25, 125: facing surface
26: protruding shape

## Claims

1. A filter pack comprising:
a filter medium collecting fine particles in a gas and the filter medium comprising folds alternately repeated on an upstream side and on a downstream side of airflow by a pleating process, at least one pair of upstream ventilation surfaces which face each other via the fold on the downstream side therebetween and into which the airflow flows, and at least one pair of downstream ventilation surfaces which face each other via the fold on the upstream side therebetween and from which the airflow flows out; and
a plurality of space maintaining members formed on each of the upstream ventilation surfaces and each of the downstream ventilation surfaces to maintain spaces of each pair of upstream ventilation surfaces and each pair of downstream ventilation surfaces, wherein
the plurality of space maintaining members formed on the upstream ventilation surfaces are intermittently formed in a direction orthogonal to the fold, and at least one of the space maintaining members formed on one side of the pair of upstream ventilation surfaces is in contact at two or more places with at least one of the space maintaining members formed on the other side of the pair of upstream ventilation surfaces.

2. The filter pack according to claim 1, wherein the plurality of space maintaining members formed on the downstream ventilation surfaces are intermittently formed in a direction orthogonal to the fold, and at least one of the space maintaining members formed on one side of the pair of downstream ventilation surfaces is in contact at two or more places with at least one of the space maintaining members formed on the other side of the pair of downstream ventilation surfaces.

3. The filter pack according to claim 1, wherein the plurality of space maintaining members formed on each of the downstream ventilation surfaces are continuously formed in a direction orthogonal to the fold.

4. The filter pack according to any one of claims 1 to 3, wherein at least one of the space maintaining members formed on the one side of the pair of upstream ventilation surfaces is in contact at two or more places with the plurality of space maintaining members adjacent thereto formed on the other side of the pair of upstream ventilation surfaces.

5. The filter pack according to any one of claims 1 to 3, wherein the plurality of space maintaining members formed on each of the upstream ventilation surfaces or each of the downstream ventilation surfaces have different heights according to the space set between the pair of upstream ventilation surfaces or the pair of downstream ventilation surfaces.

6. The filter pack according to any one of claims 1 to 3, wherein
each of the space maintaining members formed on the one side of the pair of upstream ventilation surfaces or the one side of the pair of downstream ventilation surfaces has a facing surface facing to each of the space maintaining members formed on the other side of the pair of upstream ventilation surfaces or the other side of the pair of downstream ventilation surfaces, and
a sum of lengths of the facing surface along a direction orthogonal to the fold in contact with each of the space maintaining members formed on the other side of the pair of upstream ventilation surfaces or the other side of the pair of downstream ventilation surfaces is 1% or more and 10% or less of a length along a direction orthogonal to the fold of the facing surface.

7. An air filter comprising:
the filter pack according to any one of claims 1 to 6; and
a frame surrounding the filter pack so that the folds of the filter medium of the filter pack are arranged on the upstream and downstream sides of airflow passing through the filter medium.
